# EUROPEAN PATENT SPECIFICATION

(11) **EP 2 354 575 B1**
(45) Date of publication and mention of the grant of the patent: **09.03.2016**
(21) Application number: 10187486.5
(22) Date of filing: 14.10.2010
(51) Int. Cl.: F16B 39/38

(54) **Safer lock nut**
Sicherere Sicherheitsmutter
Écrou à verrouillage sécurisé

(30) Priority: 21.01.2010 KR 20100005435; 17.06.2010 KR 20100057580
(43) Date of publication of application: 10.08.2011
(73) Proprietor: Imjin S.T. CO., LTD., Paju-si, Gyeonggi-do 413-060 (KR)
(72) Inventor: Im, Young Woo, Gyeonggi-do (KR)
(74) Representative: Vossius & Partner Patentanwälte Rechtsanwälte mbB

(56) References cited:
- WO-A1-2008/069399
- JP-A- 8 135 640
- JP-A- 2003 307 210
- KR-B1- 100 701 643

## Description

### BACKGROUND OF THE INVENTION

### FIELD OF THE INVENTION

The present invention generally relates to a saferlock nut for preventing a nut engaged with a spiral shaft from being disengaged arbitrarily, and more particularly, to a saferlock nut by which, when a nut is engaged with a bolt while passing through a spiral shaft of the bolt or is disengaged from the bolt, the engagement and the disengagement can be performed smoothly without damaging the spiral shaft and the nut is not disengaged from the spiral shaft owing to strong engaging force when the nut is spiral-engaged with the spiral shaft, in spite of external vibration.

### DESCRIPTION OF THE RELATED ART

Generally, a bolt and a nut have been widely used to couple two objects, which are usually separated into two or more pieces, by means of engagement in various fields such as parts assembly for trains and vehicles, electronic parts assembly, furniture assembly, and structure assembly in construction sites.

However, the engaging force of the simple engagement between the bolt and the nut is weakened by external shock or vibration.

That is, since a spiral or threaded shaft of the bolt is merely engaged with a spiral or threaded hole formed in the nut, the nut engaged with the spiral shaft is arbitrarily disengaged upon application of external vibration or shock during the use thereof, whereby two structures engaged and fixed by the bolt and nut are separated from each other. In a worse case, the bolt and the nut are completely disengaged from each other, and thus the structures are dropped, causing safety accidents such as damage or destruction.

To avoid the safety-accident likely situation by preventing the nut spiral-engaged with the spiral shaft of the bolt from being disengaged in spite of external shock or vibration, loose-proof nuts having various techniques have been developed and used up to date in the home country or foreign countries.

Among those loose-proof nuts, a power clutch nut developed and registered by the present applicant (disclosed in Korean Patent K.R/100902061B) has been introduced and used.

Another Lock nut is Known from WO-2008/069399. In the conventional power clutch nut, a coil spring placed in a concave recess portion formed inside the nut has a uniform diameter and its upper and lower end portions are bent to be oriented outward, such that the upper bent end portion is fixed by being engaged with a stopper groove portion provided on the upper end of the nut and the lower bent end portion is placed in a slot hole formed to be opened outward at the lower end of the concave recess portion. Thus, to engage the spiral shaft of the bolt with the nut or disengage the engaged bolt and nut from each other, if a socket separately made to cover the nut is urged to cover the nut, a push pin provided at an inner side of the socket pushes the bent end portion exposed to outside through the slot hole in a direction that the coil spring is loosened and thus the tightening force of the coil spring wound tightly around the spiral shaft is weakened, loosing the nut engaged with the spiral shaft.

However, in the conventional nut, since the coil spring tightly surrounding the outer periphery of the spiral shaft has a uniform diameter, the coil spring is loosened only in a moving range of the bent end portion moving in the range of the slot hole, whereby a lower portion of the coil spring, which moves close to the bent end portion of the lower end portion, is loosened from the spiral shaft, whereas a upper portion of the coil spring is not loosened from the spiral shaft. As a result, when the nut and the bolt are disengaged from each other, the spiral shaft is damaged by the coil spring which is not completely loosened from the spiral shaft.

Moreover, because of having relatively high elasticity, the coil spring cannot be pushed by other tools at the bent end portion placed in the slot hole. As a result, the dedicated socket capable of moving the bent end portion while covering the nut has to be used, and if there is no dedicated socket, the nut cannot be disengaged.

If vibration is generated when the nut is engaged with the spiral shaft, the nut is not arbitrarily disengaged by the tightening force of the coil spring which is tightly wound around the outer periphery of the spiral shaft. Since the upper end portion of the coil spring is bent to be oriented outward and the bent end portion is fixed by being stopped in the stopper groove portion, the bent portion of the bent end portion is broken by sever vibration and in this case, the nut cannot be disengaged from the spiral shaft.

### SUMMARY OF THE INVENTION

It is therefore an object of the present invention to prevent a bolt and a nut from being arbitrarily disengaged with each other by external shock or vibration during the use owing to tight engagement of the nut with a spiral shaft of the bolt, and to facilitate tightening and loosening of the bolt and the nut by keeping the loosening of the coil spring to be fixed when the nut is spiral-engaged to the spiral shaft formed in the bolt or the spiral-engaged bolt and nut are disengaged.

It is another object of the present invention to maximize a widening interval of the coil spring in spite of minimization of a moving distance for widening the coil spring to tight and loose the bolt and the nut, thereby facilitating the tightening and the loosing of the bolt and the nut without damaging the spiral shaft wound around the coil spring.

According to one aspect of the present invention, there is provided a saferlock nut including a nut and a coil spring. The nut includes a hexagonal nut portion having a spiral or threaded hole at a center thereof to allow a spiral or threaded shaft to be engaged therethrough, a circular nut portion integrally extending from a top surface of the hexagonal nut portion and having a dented or recessed portion therein which has a larger inner diameter than that of the spiral hole, a winding or bent portion having a step surface on a top surface of the dented portion, and a guiding slot hole for communicating with the dented portion at a lower side of the circular nut portion. The coil spring includes coil portions having tension to be placed in the dented portion of the circular nut portion, an upper end coil portion extending from an upper portion of the coil portions to be fixed by being wound by the winding portion while being placed on the step surface, and a bent end portion at a lower end of the coil portions, which is bent outward to go through the guiding slot hole.

According to another aspect of the present invention, there is provided a saferlock nut including a nut, a coil spring, and a loosening means. The nut includes a hexagonal nut portion having a spiral or threaded hole at a center thereof to allow a spiral or threaded shaft to be engaged therethrough, a circular nut portion integrally extending from a top surface of the hexagonal nut portion and having a dented or recessed portion therein which has a larger inner diameter than that of the spiral hole, a winding or bent portion having a step surface on a top surface of the dented portion, and a guiding slot hole for communicating with the dented portion at a lower side of the circular nut portion. The coil spring includes coil portions having tension to be placed in the dented portion of the circular nut portion, an upper end coil portion extending from an upper portion of the coil portions to be fixed by being wound by the winding portion while being placed on the step surface, and a bent end portion at a lower end of the coil portions, which is bent outward to go through the guiding slot hole. The loosening means includes a socket having a covering groove portion whose inner periphery is in a hexagonal shape to cover an outer periphery of the hexagonal nut portion, and a recessed groove portion at each corner portion of the covering groove portion to allow the bent end portion of the coil spring to be inserted thereinto.

The coil spring may include the plurality of coil portions for surrounding a spiral or threaded shaft of a bolt, an extension portion extending vertically from an upper end of the coil portions, the upper end coil portion integrally extending from an end of the extension portion to have a larger outer diameter than that of the coil portions, and the bent end portion at the lower end of the coil portions, which is bent outward to go through the guiding slot hole.

The coil spring may include the plurality of coil portions for surrounding a spiral or threaded shaft of a bolt, the upper end coil portion which integrally extends from an upper end of the coil portions and is bent to have a larger outer diameter than that of the coil portions and to be rested on the step surface of the nut, and the bent end portion at the lower end of the coil portions, which is bent outward to go through the guiding slot hole.

A cut portion may be formed at a side of the circular nut portion, and a front end of the upper end coil portion of the coil spring may be formed as the bent end portion to be inserted and fixed into the cut portion.

The bent end portion may be bent with two steps such that an end portion of the upper coil portion is oriented downward.

An end portion of the bent end portion going through the guiding slot hole may be bent with two steps such that the end portion is placed in, without being separated from, the recessed groove portion.

The saferlock nut may further include a stopper protrusion on a bottom surface of a side of the guiding slot hole to stop the bent end portion of the coil spring.

The saferlock nut may further include stopper grooves on a top surface and a bottom surface of a side of the guiding slot hole to stop the bent end portion of the coil spring.

According to another aspect of the present invention, there is provided a saferlock nut including a nut and a coil spring. The nut includes a hexagonal nut portion having a hexagonal outer periphery and having a spiral or threaded hole at a center thereof, a circular nut portion integrally extending from a top surface of the hexagonal nut portion and having a dented or recessed portion therein which has a circular outer periphery and has a larger inner diameter than that of the spiral hole, and a winding or bent portion having a step surface on a top surface of the dented portion to surround an upper end coil portion of the coil spring while having the upper end coil portion placed thereon. The coil spring includes the upper end coil portion fixed by the winding portion while being placed on the step surface, and coil portions integrally extending at a lower portion of the upper end coil portion to surround an outer periphery of a spiral or threaded shaft while being positioned in the dented portion due to a smaller outer diameter than that of the upper coil portion.

According to another aspect of the present invention, there is provided a saferlock nut including a nut and a coil spring. The nut includes a hexagonal nut portion having a hexagonal outer periphery and having a spiral hole at a center thereof to allow a spiral shaft to be engaged therethrough, a circular nut portion integrally extending from a top surface of the hexagonal nut portion and having a dented or recessed portion therein which has a circular outer periphery and has a larger inner diameter than that of the spiral hole, a winding or bent portion having a step surface on a top surface of the dented portion to surround an upper end coil portion of the coil spring while having the upper end coil portion placed thereon, and at least three cut groove portions in the circular nut portion. The coil spring includes the upper end coil portion fixed by the winding portion while being placed on the step surface, and coil portions integrally extending at a lower portion of the upper end coil portion to surround an outer periphery of a spiral shaft while contacting an inner periphery of the dented portion due to a smaller outer diameter than that of the upper coil portion.

The coil portions may be formed of at least 1 coil (convolution) to 2 coils (convolutions).

### BRIEF DESCRIPTION OF THE DRAWINGS

FIG. 1 is an exploded perspective view showing a structure of a saferlock nut according to the present invention;
FIGs. 2A and 2b are a cross-sectional view showing a state before coupling of a coil spring to a nut and a cross-sectional view view showing a state where a spiral or threaded shaft is engaged after coupling of the coil spring to the nut, respectively, to show the structure of the saferlock nut according to the present invention;
FIGs. 3A through 3C are a front view showing a state before engagement of the spiral shaft to the nut, a front view showing a state before insertion of a socket into the nut after engagement of the spiral shaft to the nut, and a front view showing a state where the socket is inserted into a hexgonal nut portion of the nut after engagement of the spiral shaft to the nut, respectively, to show the structure of the saferlock nut according to the present invention;
FIGs. 4A through 4C are a planar cross-sectional view showing a state before engagement of the spiral shaft to the nut, a planar cross-sectional view showing a state where the socket is inserted into only a circular nut portion of the nut after engagement of the spiral shaft to the nut, and a planar cross-sectional view showing a state where the socket is inserted into the hexagonal nut portion of the nut after engagement of the spiral shaft to the nut, respectively, to show the structure of the saferlock nut according to the present invention;
FIGs. 5A through 5C are a prespective view of the coil spring, a cross-sectional view showing the coil spring is coupled with the nut, and a plan view of the coil spring, respectively, to show another embodiment of the coil spring;
FIG. 6 is an exploded perspective view for showing a first embodiement of the present invention;
FIGs. 7A through 7C are a cross-sectional view showing a state before coupling of the coil spring to the nut, a cross-sectional view showing a state where a spiral or threaded shaft is engaged after coupling of the coil spring to the nut, and a plan view showing a state where the coil spring is loosened by a socket, respectively, to show the structure of the first embodmient of the present invention;

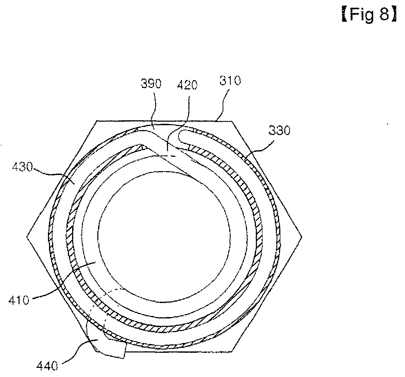

FIG. 8 is a planar cross-sectional view taken along a 1nie A-A of FIG. 7
FIG. 9A is a rear view of a nut for showing a first embodiment of the coil spring according to the present invention;
FIG. 9B is a front view of a nut for showing a second embodiment of the coil spring according to the present invention;
FIG. 10A is a front view of a nut for showing a third embodiment of the coil spring according to the present invention;
FIG. 10B is a front view of a nut for showing a fourth embodiment of the coil spring according to the present invention;
FIGs. 11A through 11c are views showing an embodiment where a stopper means is provided in a guiding slot hole to stop a bent end portion of the coil spring;
FIGs. 12A and 12B are a cross-sectional view showing a structure of the nut and a cross-sectional view showing a state where a spiral or threaded shaft of the bolt is engaged with the nut, respectively, to show a structure of a second embodiment of the nut according to the present invention;
FIG. 13 is an exploded perspective view showing a structure of a third embodiment of the nut according to the present invention;
FIGs. 14A and 14B are a cross-sectional view showing a state before engagement of the spiral shaft and a cross-sectional view showing a state where the spiral shaft is engaged, respectively, to show a structure of a third embodiment of the nut according to the present invention; and
FIGs. 15A and 15B are a planar cross-sectional view showing a state before engagement of the spiral shaft and a planar cross-sectional view showing a state where the spiral shaft is engaged, respectively, to show a structure of the third embodiment of the nut according to the present invention.

### DETAILED DESCRIPTION OF THE EMBODIMENTS

Hereinafter, embodiments of the present invention will be described in detail with reference to the accompanying drawings.

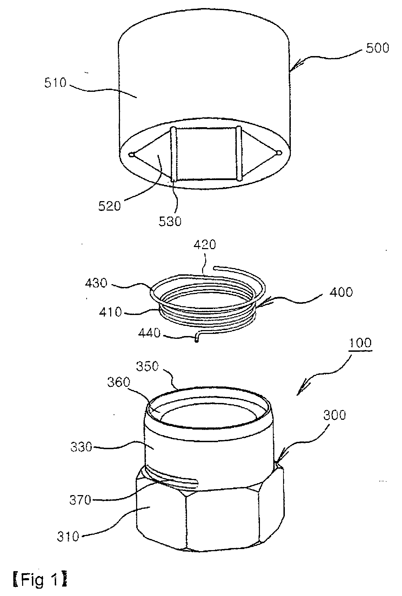

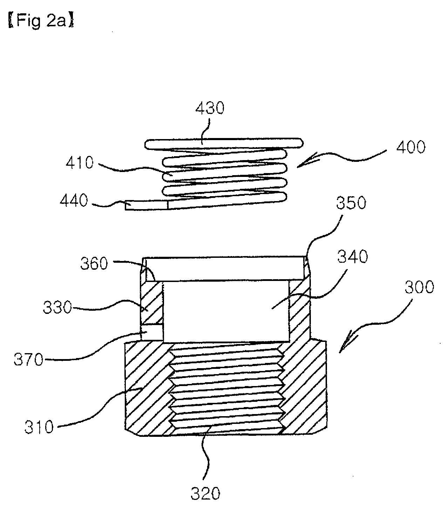

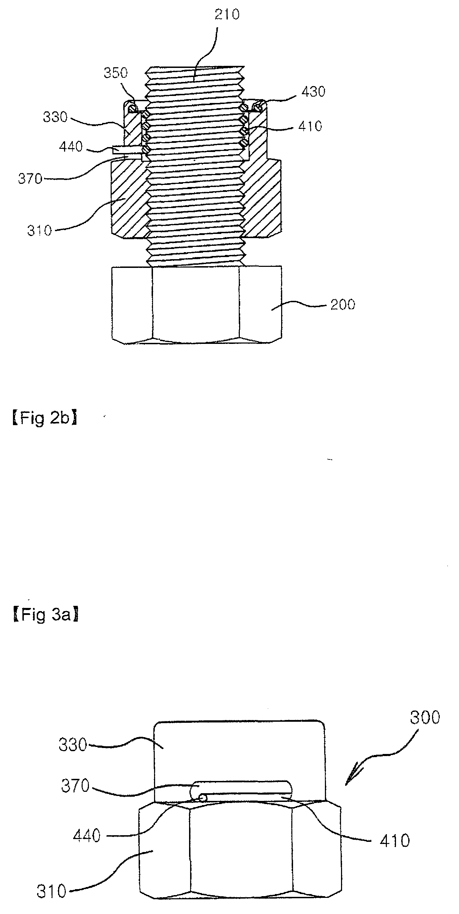

FIG. 1 is an exploded perspective view showing a structure of a saferlock nut 100 according to the present invention, and FIGs. 2A and 2B are cross-sectional views showing a state where the present invention is applied. The saferlock nut 100 according to the present invention includes a nut 300 with which a spiral or threaded shaft 210 of a bolt 200 is engaged by passing through the nut 300, a coil spring 400 placed in an inner side of the nut 300 to tightly hold the bolt 200 by tightly surrounding the outer periphery of the spiral shaft 210 of the bolt 200 passing thruogh the nut 300, and a loosening or disengaging means 500 covered on the outer periphery of the nut 300 to widen the coil spring 400 outwardly and thus facilitate rotation of the bolt 200 and the nut 300 when engagement and disengagement of the bolt 200.

The nut 300 is provided with a hexagonal nut portion 310 having an outer periphery in a hexagonal shape and a spiral or threaded hole 320 at a center thereof to allow engagement of the spiral shaft 210 of the bolt 200 therewith. The nut 300 is also provided with a circular nut portion 330 extending integrally from a top surface of the hexagonal nut portion 310 to have a circular outer periphery and having a dented or recessed portion 340 with an inner diameter larger than that of the spiral hole 320. On a top surface of the dented portion 340 of the cicular nut portion 330 is provided a winding or bent portion 350 having a step surface 360 to surround the coil spring 400 in a state where a top end coil portion of the coil spring 400 is placed. At a lower side of the circular nut portion 330 is provided a guiding slot hole 370 communicating with the dented portion 340 to allow a lower portion of the coil spring 400 to freely move therethrough.

The coil spring 400 includes a plurality of coil portions 410 placed in the dented portion 340 of the circular nut portion 330 to surround the spiral shaft 210 of the bolt 200, an extension portion 420 extending in perpendicular from an upper end portion of the coil portions 410, an upper end coil portion 430 extending integrally from an end of the extension portion 420 and having a larger outer diameter than that of the coil portions 410, and a bent end portion 440 whose end portion positioned at a lower end of the coil portions 410 is bent outward to go through the guiding slot hole 370.

The outer diameter of the coil portions 410 is spaced apart from the inner periphery of the dented portion 340 to provide a space for allowing the coil portions 410 to be widened outward.

The loosening or disengaging means 500 has a socket 510 with a covering groove portion 520 whose inner periphery is in a hexagonal shape to cover the outer periphery of the hexagonal nut portion 310. Each corner portion of the covering groove portion 520 has a recessed groove portion 530 in a semicircular shape.

The loosening or disengaging means 500 uses a currently widely used socket.

In the saferlock nut 100 structured as described above, as shown in FIG. 2A, before the coil spring 400 is placed in the dented portion 340 of the nut 300, the winding portion 350 is maintained vertical.

In this state, as shown in FIG. 2B, the coil spring 400 is placed in the dented portion 340 of the nut 300, and the bent end portion 440 provided at the lower end portion of the coil portion 410 of the coil spring 400 is positioned in the guiding slot hole 370. When the top coil portion 430 is placed on the step surface 360, the winding portion 350 provided on the top of the circular nut portion 330 is wound inwardly. Then the winding portion 350 fixes and couples the upper end coil portion 430 of the coil spring 400 placed on the step surface 360 while surrounding the upper end coil portion 430, thus completing nut formation.

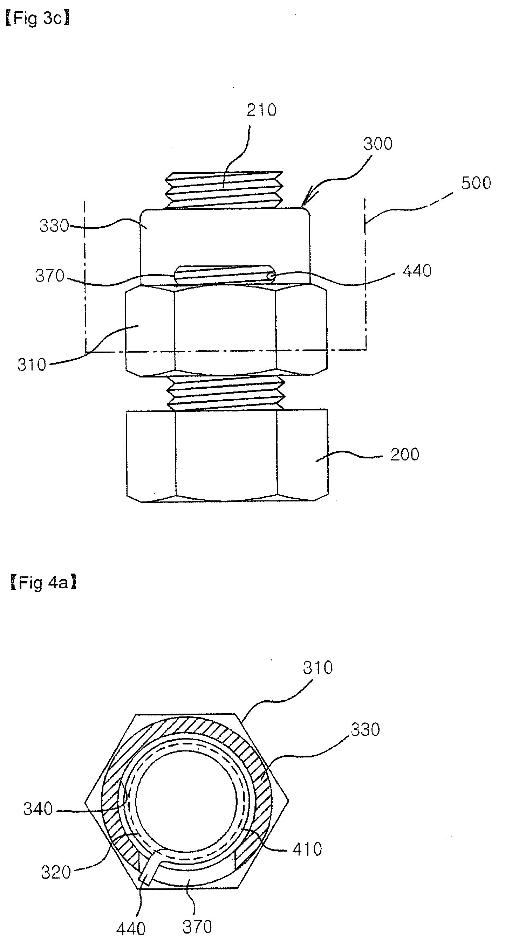

In this situation, the bolt 200 is engaged with the nut 300. Before the spiral shaft 210 of the bolt 200 is engaged with the nut 300, a part of the inner diameter of the coil portions 410 is smaller than the inner diameter of the spiral hole 320 due to the tightening force of the coil portions 410 of the coil spring 400 as shown in FIGs. 3A and 4A. In this case, the bent end portion 440 provided at the lower end of the coil portions 410 is positioned at a left side of the guiding slot hole 370 in the winding direction of the coil portions 410 while being within the guiding slot hole 370.

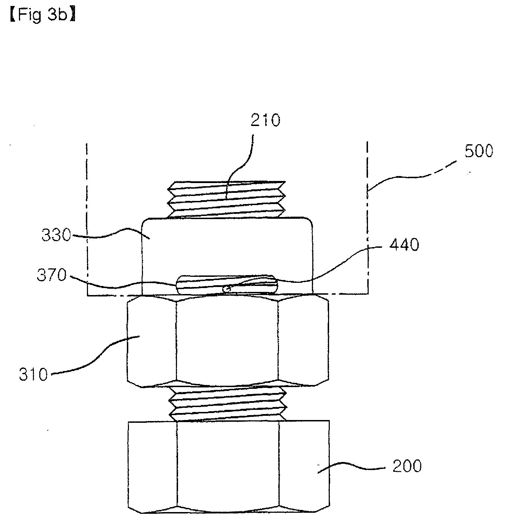

In this state, the spiral shaft 210 of the bolt 200 is engaged to the spiral hole 320 through the lower end portion of the nut 300. A front portion of the spiral shaft 210 going through the spiral hole 320 contacts the bent end portion 440 which is the lowermost portion of the coil portions 410 of the coil spring 400 positioned within the dented portion 340. Then due to continuous rotation of the spiral shaft 210, the frontmost portion of a spiral groove formed in the outer periphery of the spiral shaft 210 is engaged with the end portion of the coil portions 410, whereby as shown in FIG. 3B, the coil portions 410 are wound around the outer periphery of the spiral shaft 210 in such a way that the coil portions 410 are forcedly widened to fit their diameter to the outer diameter of the spiral shaft 210.

When the coil portions 410 are wound around the spiral shaft 210 while being forcedly windened by the outer diameter of the spiral shaft 210, the bent end portion 440 provided at the end portion of the coil portions 410 is positioned at the center in the guiding slot hole 370 according to a widening interval of the coil portions 410.

As such, once the spiral shaft 210 is engaged with the spiral hole 320 of the nut 300 and the coil spring 400 positioned in the dented portion 340 surround the outer periphery of the spiral shaft 210, the spiral shaft 210 is tightly held by the tension of the coil spring 400, i.e., the tightening force thereof. Consequently, in spite of external vibration or shock during use or an arificial force for forcedly disengaging the bolt 200 and the nut 300, the bolt 200 and the nut 300 are not disengaged, guaranteeing safe use.

To disengage the bolt 200 and the nut 300 engaged with each other in the foregoing manner, the socket 510, which is the generally widely used loosening or disengaging means 500, may be used.

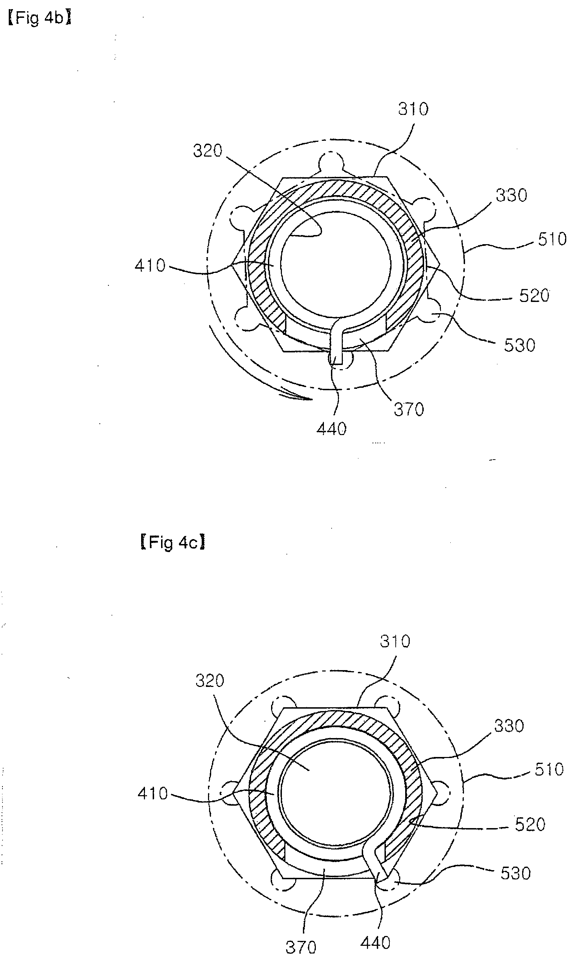

That is, as shown in FIG. 4B, the covering groove portion 520 of the socket 510 covers the circular nut portion 330. In this state, the bent end portion 440 of the coil spring 400 is positioned in any one of the recessed groove portions 530 provided in the covering groove portion 520 in a hexagonal shape.

Once the covering groove portion 520 of the socket 510 covers the circular nut portion 330 in a state where the bent end portion 440 is positioned at the recessed groove portion 530, the hexagonal shape of the covering groove portion 520 and the hexagonal shape of the hexagonal nut portion 310 integrally formed at the lower end of the circular nut portion 330 are not matched to each other as shown in FIG. 4B, whereby the socket 510 covers only the circuit nut portion 330.

In this state, if the socket 510 is rotated in a direction for loosening the coil spring 400 while the bolt 200 being fixed, as shown in FIGs. 3C and 4C, the bent end portion 440 of the coil spring 400 stopped in the recessed groove portion 530 of the socket 510 is forcedly moved to a right side of the guiding slot hole 370 by the rotation, and the coil portions 410 are widened outwardly by the forced movement of the bent end portion 440, thus being spaced apart from the outer periphery of the spiral shaft 210.

As such, upon rotation of the socket 510, as shown in FIG. 3C, the covering groove portion 520 and the hexagonal nut portion 310 are matched to each other, and in this state, as shown in FIG. 4C, the covering groove portion 520 covers up to the hexagonal nut portion 310.

Once the bent end portion 440 of the coil portions 410 is stopped in the recessed groove portion 530 of the socket 510, and the covering groove portion 520 covers the hexagonal nut portion 310 while the coil portions 410 being widened apart from the outer peripery of the spiral shaft 210 due to the rotation of the socket 510, the socket 51 is not arbitrarily rotated in spite of the tension of the coil spring 400 by the release of the force applied to the socket 510, thus disengaging the nut 300 and the spiral shaft 210 of the bolt 200 without a difficulty and damage in a state where the coil portions 410 are widened apart from the spiral shaft 210.

When the coil spring 400, which tightly surrounds the outer circumference of the spiral shaft 210 by its tension, is forcedly widened by using the socket 510 in the foregoing manner, the forcedly widened coil spring 400 is applied with force at a point in a side thereof. In the present invention, the upper end coil portion 430 on top of the coil portions 410 is placed on the step surface 360 of the circular nut portion 330, while being urged to have a larger outer diameter than that of the other coil portions 410, and is wound by the winding portion 350 to be firmly fixed. Consecluently, the force for forcedly widening the coil portions 410 is uniformly distributed over the coil portions 410 and the upper end coil portion 430 having a relatively large outer diameter, rather than concentrated to a side of the coil spring 400, thus preventing the coil spring 400 from being broken by continuous strong external force.

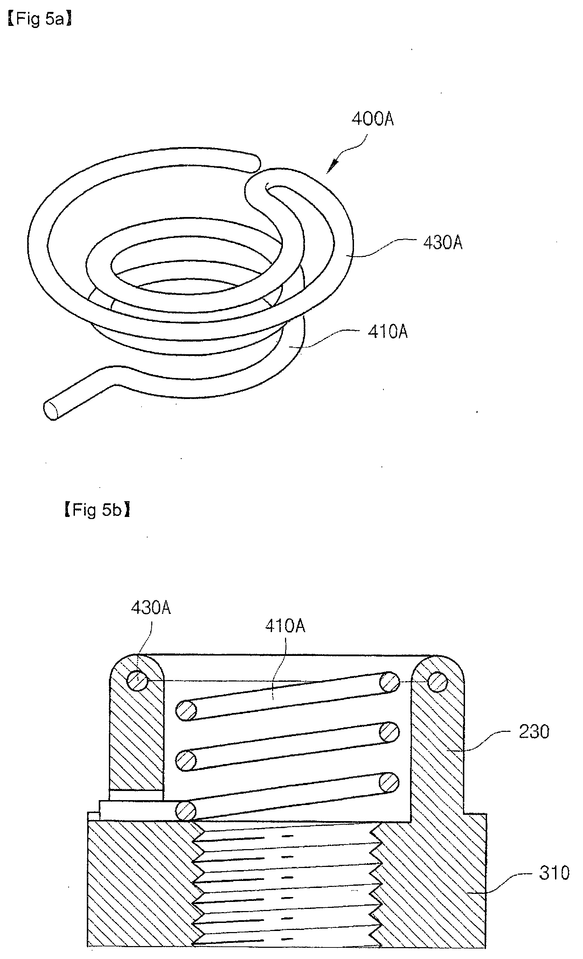

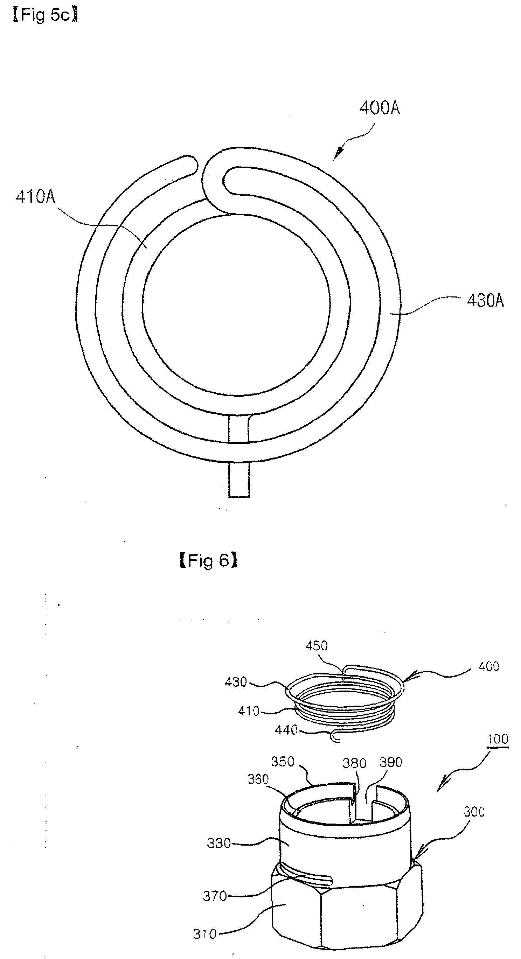

In an alternative embodiment of the coil spring 400 according to the present invention, as shown in FIG. 5, a coil spring 400a may include a plurality of coil portions 410a for surrounding the spiral shaft 210 of the bolt 200 and an upper end coil portion 430a which integrally extends from an upper end of the coil portions 410, is bent outward to have a larger outer diameter than that of the other coil portions 410, and is placed on the step surface 360 of the nut 300.

That is, once the coil portions 410a are positioned in the dented portion 340 of the nut 300, the upper end coil portion 430a extending from the upper end of the coil portions 410 and bent outward is placed on the step surface 360 of the nut 300.

In this state, if the winding portion 350 extending upward from the outer periphery of the step surface 360 is bent inward, the upper end coil portion 430a placed on the step surface 360 is firmly fixed by the winding portion 350.

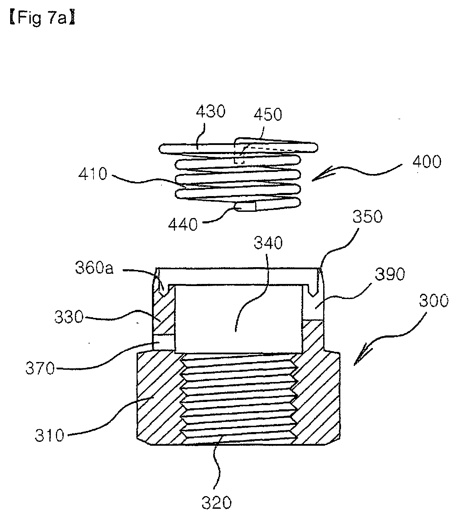

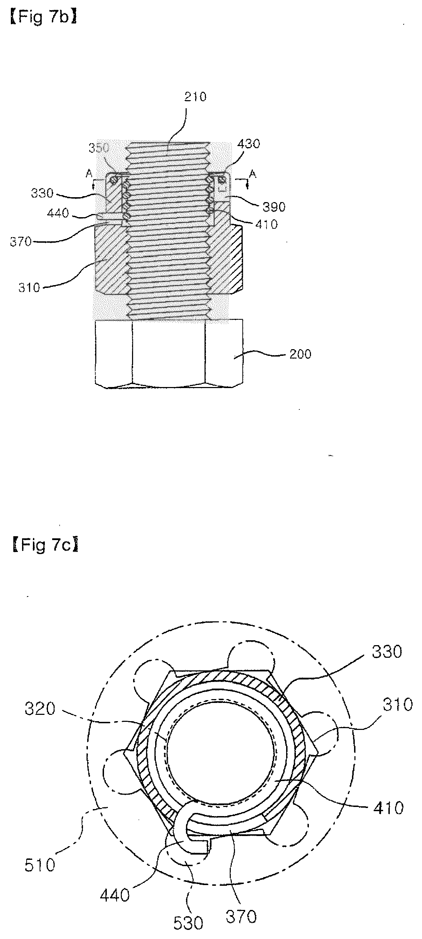

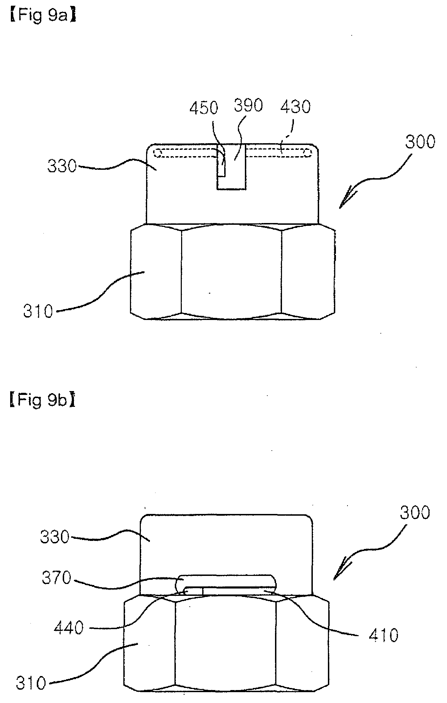

In a first embodiment of the nut 100 according to the present invention, as shown in FIGs. 6 through 7C, a resting groove 380 for allowing the upper end coil portion 430 to be rest therein is formed in the step surface 360 of the circular nut portion 330 on which the upper end coil portion 430 of the coil spring 400 is placed. Also is provided a cut portion 390 at a side of the circular nut portion 330. As shown in FIG. 9A, a stopper portion 450 is provided to insert and fix the front end of the upper end coil portion 430 of the coil spring 400 into the cut portion 390. As shown in FIG. 9B, the bent end portion 440 positioned in the guiding slot hole 370 may be bent with two steps such that the bent end portion 440 may be stably stopped in, without being separated from the recessed groove portion 530 of the socket 510

The cut portion 390 allows the stopper portion 450 to be stopped on a surface thereof. In addition, when the upper end coil portion 430 of the coil spring 400 is fixed by being wound around the winding portion 350 while being placed on the step surface 360, a bent point between the extension portion 420 and the upper end coil portion 430 is positioned at an end portion of the cut portion 390, such that both the tension of the coil portions 410 and the tension of the extension 420 extending from the coil portions 410 work together, thus further increasing the tightening force of the coil spring 400.

The above-described first embodiment of the present invention provides the same function of engaging the spiral shaft of the bolt to the nut and tightly holding the spiral shaft by the coil spring in the engaged state as the present invention. However, to disengage the bolt 200 engaged to the nut 300, when the covering groove portion 520 of the socket 510 covers the circular nut portion 330 as show in FIG. 4C, the bent end portion 440, stopped in the recessed groove portion 530, is forcedly pushed by the rotating force of the socket 510, such that the coil portions 410 of the coil spring 400 are widened from the outer periphery of the spiral shaft 210. In this state, since the bent end portion 440 has been bent with two steps, the two-step bent end portion 440 is stably and tightly positioned in the recessed groove portion 530 of the widely used socket 510, the bent end portion 440 is pushed by the socket 510 without being separated from the recessed groove portion 530.

The upper end coil portion 430 provided at the upper end of the coil spring 400 which tightly holds the outer periphery of the spiral shaft 210 is fixed by the winding portion 350 while being tightly rested in the resting groove 380 provided in the step surface 360, rather than being wound by the winding portion 350 while being placed on the step surface 360, thereby further firmly fixing the upper coil portion 430. Moreover, the stopper surface 450 of the upper end coil portion 430 whose front end is bent downward is stopped on a surface of the cut portion 390 provided at a side of the circular nut portion 330 while being positioned within the cut portion 390. Thus, in spite of an external aritifical force, the upper end coil portion 430 fixed by the winding portion 350 in a state of being rested in the step surface 360 or the resting groove 380 provided therein, while being wound in the same manner as the coil portions 410, may be used without being pushed.

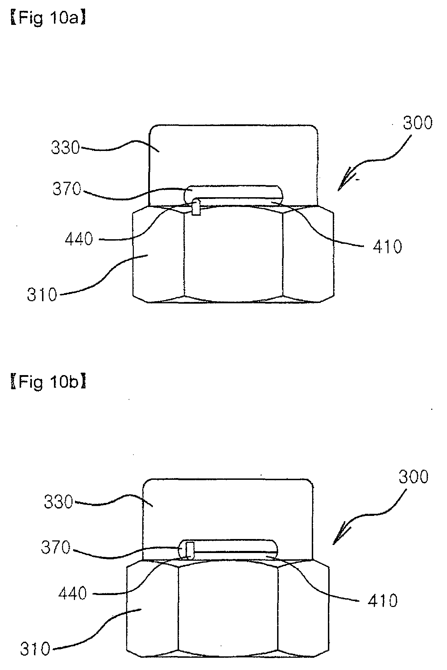

In an alternative embodiment of the coil spring 400 according to the present invention, an end portion of the two-step bent end portion 430 may be bent downward or upward as shown in FIGs. 10A and 10B.

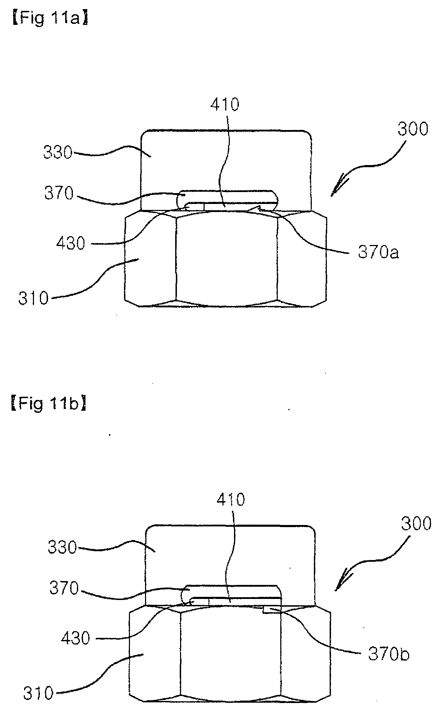

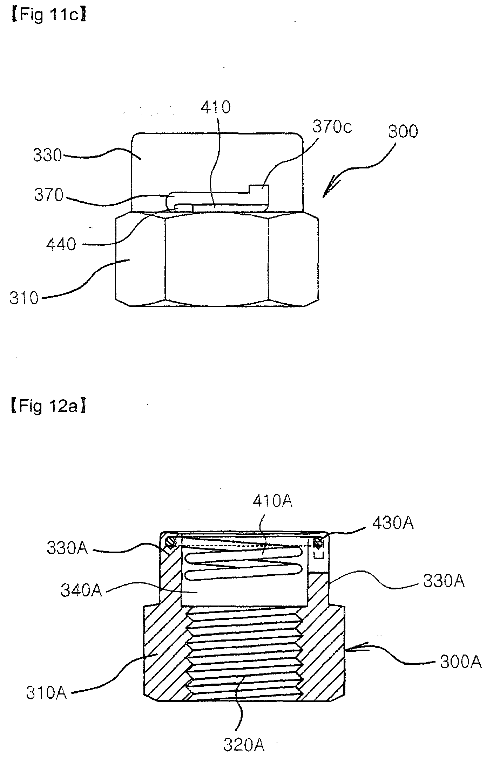

In another alternative embodiment of the nut 300, as shown in FIG. 11A, on a bottom surface of a side of the guiding slot hole 370 may be formed a stopper protrusion 370a, and as shown in FIGs. 11B and 11C, stopper grooves 370b and 370c may be formed a top surface and a bottom surface of a side of the guiding slot hole 370.

With the foregoing structure, to disengage the bolt 200 and the nut 300, when the bent end portion 440 is forcedly pushed by using the socket 510 or the coil portions 410 are widened by forcedly pushing the bent end portion 440 using other tools, the bent end portion 440 is stopped by the stopper protrusion 370a or the stopper grooves 370b and 370c, whereby the coil portions 410 are kept to be widened from the outer periphery of the spiral shaft 210 without the socket 510 and thus the bolt 200 and the nut 300 can be easily disengaged.

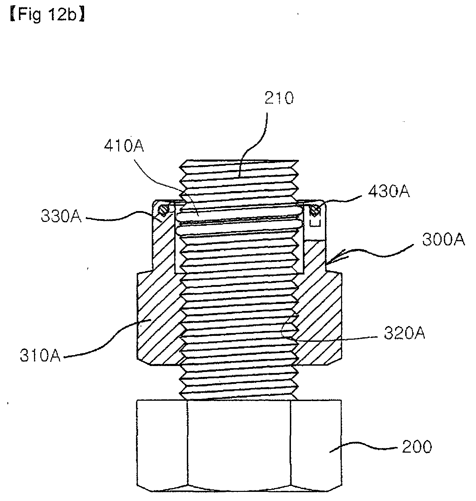

A second embodmient of the present invention, as shown in FIGs. 12A and 12B, may include a nut 300a and the coil spring 400. The nut 300a includes a hexagonal nut portion 310a having a spiral hole 320a which has a hexagonal outer periphery and allows the spiral shaft 210 of the bolt 200 to go through a center thereof, a circular nut portion 330a which integrally extends from the top surface of the hexagonal nut portion 310a and has a dented portion 340a having a larger inner diameter than that of the spiral hole, and a winding portion 350a on the top surface of the dented portion 340a, which has a step surface 360a for surrounding an upper end coil portion 430a of the coil spring 400 while allowing the top end coil portion to be placed thereon. The coil spring 400 includes the upper end coil portion 430a fixed by the winding portion 350a while being placed on the step surface 360a of the circular nut portion 330a, and the coil portions 410a integrally extending under the upper end coil portion 430a and having a smaller outer diameter than the upper end coil portion 430a to surround the outer periphery of the spiral shaft while being positioned in the dented portion 340a.

Preferably, the coil portions 410a may be formed of at least 1 coil (convolution) to 2 coils (convolutions), and the lower portion of the coil portions 410a and the bottom surface of the dented portion 340a form a predetermined space such that the coil portions 410a are wound around the spiral shaft while moving according to the interval of the spiral groove of the spiral shaft 210.

In the present invention structured as described above, as shown in FIG. 12A, when the bolt 200 is not screw-engaged to the nut 300, the upper end coil portion 430a of the coil spring 400a is fixed by being wound around the winding portion 350a while being placed on the step surface of the circular nut portion 330, and the coil portions 410a integrally extending under the upper end coil portion 430a are not fixed at a lower portion thereof to anywhere of the nut 300 while being positioned in the dented portion 340a. Thus, the inner diameter of the coil portions 410a is reduced by the tension of the coil portions 410a and a height thereof is minimized.

In this state, as shown in FIG. 12B, the top surface of the spiral shaft 210 going through the spiral hole 320 contacts the lowermost end of the coil portions 410a positioned in the dented portion 340a, and if the spiral shaft 210 is continously rotated in this state, the lower end of the coil portions 410a goes toward the spiral groove start point, after which the coil portions 410a are forcedly widened to fit their diameter to the outer diameter of the spiral shaft 210 and are wound around the spiral shaft 210 while intervals between the coil portions 410a being widened according to the interval of the spiral groove.

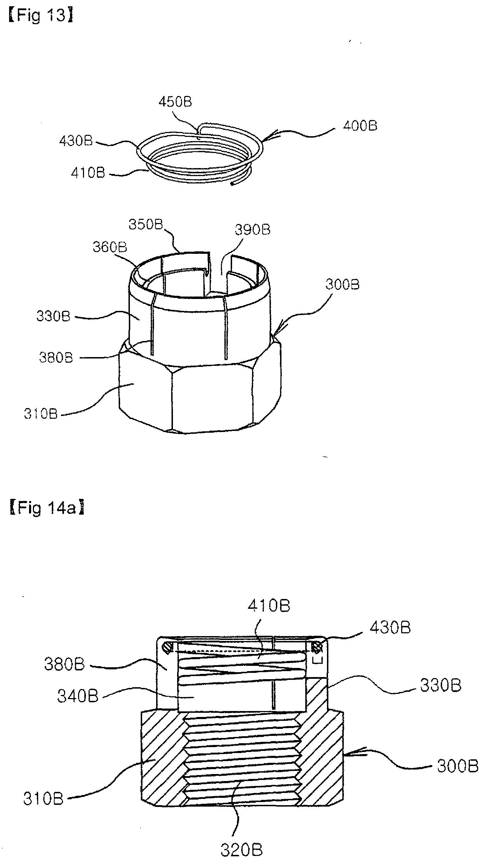

A third embodiment of the present invention, as shown in FIG. 13, includes a nut 300b and a coil spring 400b. The nut 300b includes a hexagonal nut portion 310b having a hexagonal outer periphery and having a spiral hole 320b for allowing the spiral shaft 210 of the bolt 200 to be engaged through a center thereof, a circular nut portion 330b integrally extending from the top surface of the hexagonal nut portion 310b and having a dented portion 340b having a circular outer periphery and a larger inner diameter than that of the spiral hole 320b, a winding portion 350b on the top surface of the dented portion 340b, which has a step surface 360b for surrounding an upper end coil portion 430b of a coil spring 400b while having the upper end coil portion 430b placed thereon, and at least three cut groove portion 380b in the circular nut portion 330b. The coil spring 400b includes the upper end coil portion 430b fixed by the winding portion 350b while being placed on the step surface 360b of the circular nut portion 330b and coil portions 410b integrally extending under the upper end coil portion 430b and having a smaller outer diameter than that of the upper end coil portion 430b to surround the outer periphery of the spiral shaft 210 while closely contacting the inner periphery of the dented portion 340b.

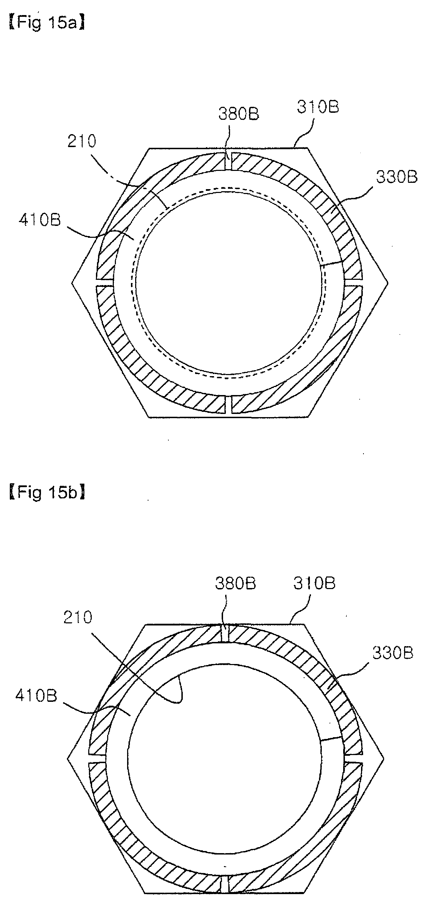

The above-described nut according to the present invention contracts inward due to the tension of the coil spring 400b as shown in FIGs. 14A and 15A before being engaged with the spiral shaft 210 of the bolt 200, and thus the outer diameter of the coil portions 410b closely contacts the inner periphery of the dented portion 340b of the circular nut portion 330b.

At this time, the outer diameter of the outer periphery of the spiral hole 320b is larger than that of the inner periphery of the coil portions 410b.

In this state, if the spiral shaft 210 is engaged through the spiral hole 320b of the hexagonal nut portion 310b, the upper portion of the spiral shaft 210 going through the spiral hole 320b contacts the lower end of the coil portions 410b of the coil spring 400b positioned in the dented portion 340b.

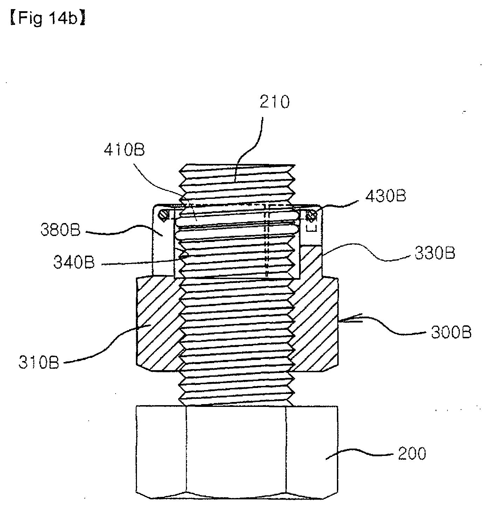

If the spiral shaft 210 is continously rotated in this state, as shown in FIGs. 14B and 15B, the front end portion of the spiral groove formed in the outer periphery of the spiral shaft 210 is engaged with the end portion of the coil portions 410b. From this point, the coil portions 410b are wound around the outer periphery of the spiral shaft 210. The coil portions 410b are wound while being forcedly widened because the coil portions 410b have a smaller inner diameter than the outer diameter of the spiral shaft 210. In this way, the coil portions 410b are widened while contacting the inner periphery of the dented portion 340b, and thus the circular nut portion 330b having the cut groove portion 380b is also forcedly widened outward together with the coil portions 410b, whereby the coil portions 410b are wound around the outer periphery of the spiral shaft 210.

Once the coil portions 410b are wound around the outer periphery of the spiral shaft 210 as described above, the spiral shaft 210 can be tightly held by the tension of the coil portions 410b. Moreover, the coil portions 410b further firmly holds the spiral shaft 210 by the force urging the circular nut portion 330b, forcedly widened by the cut groove portion 380b while contacting the otuer periphery of the coil portions 410b by widening of the coil portions 410b, to return to its original state.

As is apparent from the foregoing description, according to the present invention, the nut is configured such that the hexagonal nut portion having the spiral hole and the circular nut portion having the recessed groove portion and the guiding slot hole are formed integrally, the lower bent end portion is inserted into the guiding slot hole while the coil spring being rested in the recessed groove portion, and the upper bent end portion is fixed by being wound around the winding portion of the circular nut portion. Thus, when the bolt is engaged with or disengaged from the nut, the upper portion of the coil spring is placed on the step surface of the circular nut portion while the coil portions being wound, and is fixed by being wound by the winding portion. Thus, in spite of application of external shock and vibration to the coil spring, the external shock or vibration is uniformly distributed over the coil spring and is dissipated, rather than being concentrated to any part of the coil spring, thereby preventing the coil spring from being broken by the vibration and shock.

Furthermore, since the outer periphery of the nut is formed by the hexagonal nut portion and the circular nut portion, when the nut and the bolt, which are engaged while the coil spring being wound around the outer periphery of the spiral shaft, are disengaged, the coil spring wound around the spiral shaft is loosened by using the currently widely used socket having the covering groove portion whose inner periphery can cover the hexagonal nut portion, without using a dedicated tool as in the patent granted to the present applicant, and then the bolt and the nut can be disengaged, thereby allowing anyone to easily disengage the bolt and the nut without using a dedicated tool.

## Claims

1. A saferlock nut (100) comprising:
a nut (300) comprising a hexagonal nut portion (310) having a spiral hole (320) at a center thereof to allow a spiral shaft (210) to be engaged therethrough, a circular nut portion (330) integrally extending from a top surface of the hexagonal nut portion (310) and having a dented portion (340) therein which has a larger inner diameter than that of the spiral hole (320), a winding portion (350) having a step surface (360) on a top surface of the dented portion (340), and a guiding slot hole (370) for communicating with the dented portion (340) at a lower side of the circular nut portion (330); and
a coil spring (400) comprising coil portions (410) having tension to be placed in the dented portion (340) of the circular nut portion (330), an upper end coil portion (430) extending from an upper portion of the coil portions (410) to be fixed by being wound by the winding portion (350) while being placed on the step surface (360), and a bent end portion (440) at a lower end of the coil portions (410), which is bent outward to go through the guiding slot hole (370).

2. The saferlock nut (100) of claim 1, further comprising:
a loosening means (500) comprising a socket (510) having a covering groove portion (520) whose inner periphery is in a hexagonal shape to cover an outer periphery of the hexagonal nut portion (310), and a recessed groove portion (530) at each corner portion of the covering groove portion (520) to allow the bent end portion (440) of the coil spring (400) to be inserted thereinto.

3. The saferlock (100) nut of claim 1 or 2, wherein the coil spring (400) comprises:
the plurality of coil portions (410) for surrounding a spiral shaft (210) of a bolt (200);
an extension portion (420) extending vertically from an upper end of the coil portions (410);
the upper end coil portion (430) integrally extending from an end of the extension portion (420) to have a larger outer diameter than that of the coil portions (410); and
the bent end portion (440) at the lower end of the coil portions (410), which is bent outward to go through the guiding slot hole (370).

4. The saferlock nut (100) of claim 1 or 2, wherein the coil spring (400) comprises:
the plurality of coil portions (410) for surrounding a spiral shaft (210) of a bolt (200);
the upper end coil portion (430) which integrally extends from an upper end of the coil portions (410) and is bent to have a larger outer diameter than that of the coil portions (410) and to be rested on the step surface (360) of the nut (300); and
the bent end portion (440) at the lower end of the coil portions (410), which is bent outward to go through the guiding slot hole (370).

5. The saferlock nut (100) of any one of claims 1 to 4, wherein a cut portion (390) is formed at a side of the circular nut portion (330), and a front end of the upper end coil portion (430) of the coil spring (400) is formed as the bent end portion (440) to be inserted and fixed into the cut portion (390).

6. The saferlock nut (100) of claim 5, wherein the bent end portion (440) is bent with two steps such that an end portion of the upper end coil portion (430) is oriented downward.

7. The saferlock nut (100) of any one of claims 2 to 6, wherein an end portion of the bent end portion (440) going through the guiding slot hole (370) is bent with two steps such that the end portion is placed in, without being separated from, the recessed groove portion (530).

8. The saferlock nut (100) of any one of claims 1 to 7, further comprising a stopper protrusion (370a) on a bottom surface of a side of the guiding slot hole (370) to stop the bent end portion (440) of the coil spring (400).

9. The saferlock nut (100) of any one of claims 1 to 7, further comprising stopper grooves (370b, 370c) on a top surface and a bottom surface of a side of the guiding slot hole (370) to stop the bent end portion (440) of the coil spring (400).

## Patentansprüche

1. Sichere Sicherungsmutter (100), die aufweist:
eine Mutter (300), die einen Sechskantmutterabschnitt (310), der ein Spiralloch (320) in seiner Mitte aufweist, um es zu ermöglichen, dass ein Spiralschaft (210) dort hindurch in Eingriff gebracht wird, einen kreisförmigen Mutterabschnitt (330), der sich integral von einer oberen Fläche des Sechskantmutterabschnitts (310) erstreckt und einen eingedrückten Abschnitt (340) darin aufweist, der einen größeren Innendurchmesser als das Spiralloch (320) aufweist, einen Windungsabschnitt (350), der eine Stufenfläche (360) auf einer oberen Fläche des eingedrückten Abschnitts (340) aufweist, und ein Führungsschlitzloch (370) zur Verbindung mit dem eingedrückten Abschnitt (340) auf einer Unterseite des kreisförmigen Mutterabschnitts (330) aufweist; und
eine Schraubenfeder (400), die Spulenabschnitte (410) mit einer Spannung, die im eingedrückten Abschnitt (340) des kreisförmigen Mutterabschnitts (330) angeordnet werden sollen, einen oberen Endspulenabschnitt (430), der sich von einem oberen Abschnitt der Spulenabschnitte (410) erstreckt, der befestigt werden soll, indem er durch den Windungsabschnitt (350) gewickelt wird, während er auf dem Stufenfläche (360) angeordnet ist, und einen gebogenen Endabschnitt (440) an einem unteren Ende der Spulenabschnitte (410) aufweist, der nach außen gebogen ist, um durch das Führungsschlitzloch (370) zu gehen.

2. Sichere Sicherungsmutter (100) nach Anspruch 1, die ferner aufweist:
ein Lockerungsmittel (500), das eine Hülse (510) mit einem Abdeckungsnutabschnitt (520), dessen Innenumfang in einer Sechskantform vorliegt, um einen Außenumfang des Sechskantmutterabschnitt (310) abzudecken, und einen ausgesparten Nutabschnitt (530) an jedem Eckenabschnitt des Abdeckungsnutabschnitts (520) aufweist, um es zu ermöglichen, dass der gebogene Endabschnitt (440) der Schraubenfeder (400) darin eingesetzt wird.

3. Sichere Sicherungsmutter (100) nach Anspruch 1 oder 2, wobei die Schraubenfeder (400) aufweist:
die mehreren Spulenabschnitte (410) zum Umgeben eines Spiralschafts (210) eines Bolzens (200);
einen Erweiterungsabschnitt (420), der sich vertikal von einem oberen Ende der Spulenabschnitte (410) erstreckt;
den oberen Endspulenabschnitt (430), der sich integral von einem Ende des Erweiterungsabschnitts (420) erstreckt, so dass er einen größeren Außendurchmesser als die Spulenabschnitte (410) aufweist; und
den gebogenen Endabschnitt (440) am unteren Ende der Spulenabschnitte (410), der nach außen gebogen ist, um durch das Führungsschlitzloch (370) zu gehen.

4. Sichere Sicherungsmutter (100) nach Anspruch 1 oder 2, wobei die Schraubenfeder (400) aufweist:
die mehreren Spulenabschnitte (410) zum Umgeben eines Spiralschafts (210) eines Bolzens (200);
den oberen Endspulenabschnitt (430), der sich integral von einem oberen Ende der Spulenabschnitte (410) erstreckt und gebogen ist, um einen größeren Außendurchmesser als die Spulenabschnitte (410) aufzuweisen und auf der Stufenfläche (360) der Mutter (300) aufzuliegen; und
den gebogenen Endabschnitt (440) am unteren Ende der Spulenabschnitte (410), der nach außen gebogen ist, um durch das Führungsschlitzloch (370) zu gehen.

5. Sichere Sicherungsmutter (100) nach einem der Ansprüche 1 bis 4, wobei ein Einschnittabschnitt (390) auf einer Seite des kreisförmigen Mutterabschnitts (330) ausgebildet ist, und ein vorderes Ende des oberen Endspulenabschnitts (430) der Schraubenfeder (400) als der gebogene Endabschnitt (440) ausgebildet ist, um im Einschnittabschnitt (390) einsetzt und befestigt zu werden.

6. Sichere Sicherungsmutter (100) nach Anspruch 5, wobei der gebogene Endabschnitt (440) mit zwei Stufen gebogen ist, so dass ein Endabschnitt des oberen Endspulenabschnitts (430) nach unten gerichtet ist.

7. Sichere Sicherungsmutter (100) nach einem der Ansprüche 2 bis 6, wobei ein Endabschnitt des gebogenen Endabschnitts (440), der durch das Führungsschlitzloch (370) geht, mit zwei Stufen gebogen ist, so dass der Endabschnitt in dem ausgesparten Nutabschnitt (530) angeordnet wird, ohne von ihm getrennt zu werden.

8. Sichere Sicherungsmutter (100) nach einem der Ansprüche 1 bis 7, die ferner einen Anschlagvorsprung (370a) an einer unteren Fläche einer Seite des Führungsschlitzlochs (370) aufweist, um den gebogenen Endabschnitt (440) der Schraubenfeder (400) zu stoppen.

9. Sichere Sicherungsmutter (100) nach einem der Ansprüche 1 bis 7, die ferner Anschlagnuten (370b, 370c) auf einer oberen Fläche und einer unteren Fläche einer Seite des Führungsschlitzlochs (370) aufweist, um den gebogenen Endabschnitt (440) der Schraubenfeder (400) zu stoppen.

## Revendications

1. Écrou à verrouillage sécurisé (100), comprenant :
un écrou (300) présentant une partie d'écrou hexagonale (310) avec un alésage hélicoïdal (320) en son centre pour permettre l'engagement d'une tige hélicoïdale (210), une partie d'écrou circulaire (330) s'étendant d'un seul tenant depuis une surface de sommet de la partie d'écrou hexagonale (310) et contenant une partie bosselée (340) dont le diamètre intérieur est supérieur à celui de l'alésage hélicoïdal (320), une partie d'enroulement (350) présentant une surface d'épaulement (360) sur une surface de sommet de la partie bosselée (340), et un trou de guidage oblong (370) communiquant avec la partie bosselée (340) dans le bas de la partie d'écrou circulaire (330) ; et
un ressort hélicoïdal (400) présentant des spires (410) sous tension à mettre en place dans la partie bosselée (340) de la partie d'écrou circulaire (330), une spire d'extrémité supérieure (430) s'étendant sur le haut des spires (410) pour être fixée par enroulement par la partie d'enroulement (350) en étant disposée sur la surface d'épaulement (360), et une partie d'extrémité pliée (440) à l'extrémité inférieure des spires (410), laquelle est pliée vers l'extérieur pour passer dans le trou de guidage oblong (370).

2. Écrou à verrouillage sécurisé (100) selon la revendication 1, comprenant en outre :
un élément de desserrage (500) comprenant une douille (510) présentant une partie de recouvrement rainurée (520) dont la périphérie intérieure est de forme hexagonale pour recouvrir une périphérie extérieure de la partie d'écrou hexagonale (310), et une partie de logement rainurée (530) à chaque coin de la partie de recouvrement rainurée (520) pour permettre l'insertion de la partie d'extrémité pliée (440) du ressort hélicoïdal (400).

3. Écrou à verrouillage sécurisé (100) selon la revendication 1 ou la revendication 2, où le ressort hélicoïdal (400) comprend :
la pluralité de spires (410) destinées à entourer une tige hélicoïdale (210) d'un boulon (200) ;
un segment d'extension (420) s'étendant verticalement depuis l'extrémité supérieure des spires (410) ;
la spire d'extrémité supérieure (430) s'étendant d'un seul tenant depuis l'extrémité du segment d'extension (420) pour présenter un diamètre extérieur supérieur à celui des spires (410) ; et
la partie d'extrémité pliée (440) à l'extrémité inférieure des spires (410), laquelle est pliée vers l'extérieur pour passer dans le trou de guidage oblong (370).

4. Écrou à verrouillage sécurisé (100) selon la revendication 1 ou la revendication 2, où le ressort hélicoïdal (400) comprend :
la pluralité de spires (410) destinées à entourer une tige hélicoïdale (210) d'un boulon (200) ;
la spire d'extrémité supérieure (430) s'étendant d'un seul tenant depuis l'extrémité supérieure des spires (410) et étant pliée pour présenter un diamètre extérieur supérieur à celui des spires (410) et pour s'appuyer sur la surface d'épaulement (360) de l'écrou (300) ; et
la partie d'extrémité pliée (440) à l'extrémité inférieure des spires (410), laquelle est pliée vers l'extérieur pour passer dans le trou de guidage oblong (370).

5. Écrou à verrouillage sécurisé (100) selon l'une des revendications 1 à 4, où une découpe (390) est formée sur un côté de la partie d'écrou circulaire (330), et où une extrémité avant de la spire d'extrémité supérieure (430) du ressort hélicoïdal (400) est formée comme partie d'extrémité pliée (440) pour être insérée et fixée dans la découpe (390).

6. Écrou à verrouillage sécurisé (100) selon la revendication 5, où la partie d'extrémité pliée (440) est pliée deux fois de telle manière qu'une partie terminale de la spire d'extrémité supérieure (430) soit orientée vers le bas.

7. Écrou à verrouillage sécurisé (100) selon l'une des revendications 2 à 6, où une partie terminale de la partie d'extrémité pliée (440) passant dans le trou de guidage oblong (370) est pliée deux fois de telle manière que ladite partie terminale est mise en place dans la partie de logement rainurée (530) sans être séparée de celle-ci.

8. Écrou à verrouillage sécurisé (100) selon l'une des revendications 1 à 7, comprenant en outre une saillie d'arrêt (370a) sur une surface inférieure d'un côté du trou de guidage oblong (370) pour arrêter la partie d'extrémité pliée (440) du ressort hélicoïdal (400).

9. Écrou à verrouillage sécurisé (100) selon l'une des revendications 1 à 7, comprenant en outre des rainures d'arrêt (370b, 370c) sur une surface de sommet et une surface inférieure d'un côté du trou de guidage oblong (370) pour arrêter la partie d'extrémité pliée (440) du ressort hélicoïdal (400).
